# EUROPEAN PATENT APPLICATION

(11) **EP 1 757 623 A1**
(43) Date of publication of application: **28.02.2007**
(21) Application number: 06013690.0
(22) Date of filing: 01.07.2006
(51) Int. Cl.: C08C 19/08, C08C 19/02, C08F 8/50, C08F 236/12, C08L 9/02

(54) **Process for the preparation of low mooney nitrile terpolymers**

(30) Priority: 14.07.2005 US 699062 P
(71) Applicant: Lanxess Inc., Sarnia, Ontario N7T 7M2 (CA)
(72) Inventor: Guo, Sharon X., Pundong Shanghai 201204 (CN); Guerin, Frederic, Stratford Ontario N5A 6X9 (CA); Nasreddine, Victor, Cranberry - PA 16066-2238 (US); Ong, Christopher M., 51375 Leverkusen (DE)
(74) Representative: Wichmann, Birgid

(57) **Abstract**

The present invention relates to a process for the production of optionally hydrogenated nitrile terpolymers having lower molecular weights, lower Mooney viscosities and narrower molecular weight distributions than those known in the art.

The present invention also relates to optionally hydrogenated nitrile terpolymers having lower molecular weights, lower Mooney viscosities and narrower molecular weight distributions than those known in the art.

## Description

### FIELD OF THE INVENTION

The present invention relates to a process for the production of, optionally hydrogenated nitrile terpolymers having lower Mooney viscosities than those known in the art.

The present invention also relates to optionally hydrogenated nitrile terpolymers having lower Mooney viscosities than those known in the art.

Also, the present invention relates to a rubber compound containing an optionally hydrogenated nitrile terpolymers having lower Mooney viscosities.

### BACKGROUND OF THE INVENTION

Hydrogenated nitrile rubber (HNBR), prepared by the selective hydrogenation of acrylonitrile-butadiene rubber (nitrile rubber; NBR, a co-polymer comprising at least one conjugated diene, at least one unsaturated nitrile and optionally further co-monomers), is a specialty rubber which has very good heat resistance, excellent ozone and chemical resistance, and excellent oil resistance. Coupled with the high level of mechanical properties of the rubber (in particular the high resistance to abrasion) it is not surprising that NBR and HNBR has found widespread use in the automotive (seals, hoses, bearing pads) oil (stators, well head seals, valve plates), electrical (cable sheathing), mechanical engineering (wheels, rollers) and shipbuilding (pipe seals, couplings) industries, amongst others.

Commercially available NBR and HNBR have a Mooney viscosity in the range of from 55 to 105, a molecular weight in the range of from 200,000 to 500,000 g/mol, and for the HNBR a polydispersity greater than 3.0 and a residual double bond (RDB) content in the range of from 1 to 18% (by IR spectroscopy).

One limitation in processing NBR and HNBR is the relatively high Mooney viscosity. In principle, NBR and HNBR having a lower molecular weight and lower Mooney viscosity would have better processability. Attempts have been made to reduce the molecular weight of the polymer by mastication (mechanical breakdown) and by chemical means (for example, using strong acid), but such methods have the disadvantages that they result in the introduction of functional groups (such as carboxylic acid and ester groups) into the polymer, and the altering of the micro-structure of the polymer. This results in disadvantageous changes in the properties of the polymer. In addition, these types of approaches, by their very nature, produce polymers having a broad molecular weight distribution.

A optionally hydrogenated nitrile rubber having a low Mooney viscosity (<55) and improved processability, but which has the same microstructure as those rubbers which are currently available, is difficult to manufacture using current technologies. The hydrogenation of NBR to produce HNBR results in an even bigger increase in the Mooney viscosity of the raw polymer. This Mooney Increase Ratio (MIR) is generally around 2, depending upon the polymer grade, hydrogenation level and nature of the feedstock. Furthermore, limitations associated with the production of NBR itself dictate the low viscosity range for the HNBR feedstock.

Karl Ziegler's discovery of the high effectiveness of certain metal salts, in combination with main group alkylating agents, to promote olefin polymerization under mild conditions has had a significant impact on chemical research and production to date. It was discovered early on that some "Ziegler-type" catalysts not only promote the proposed coordination-insertion mechanism but also affect an entirely different chemical process that is the mutual exchange (or metathesis) reaction of alkenes.

Acyclic diene metathesis (or ADMET) is catalyzed by a great variety of transition metal complexes as well as non-metallic systems. Heterogeneous catalyst systems based on metal oxides, sulfides or metal salts were originally used for the metathesis of olefins. However, the limited stability (especially towards hetero-substituents) and the lack of selectivity resulting from the numerous active sites and side reactions are major drawbacks of the heterogeneous systems.

Homogeneous systems have also been devised and used to effect olefin metathesis. These systems offer significant activity and control advantages over the heterogeneous catalyst systems. For example, certain Rhodium based complexes are effective catalysts for the metathesis of electron-rich olefins.

The discovery that certain metal-alkylidene complexes are capable of catalyzing the metathesis of olefins triggered the development of a new generation of well-defined, highly active, single-site catalysts. Amongst these, bis-(tricyclohexylphosphine)-benzylidene ruthenium dichloride (commonly know as Grubb's catalyst) has been widely used, due to its remarkable insensitivity to air and moisture and high tolerance towards various functional groups. Unlike the molybdenum-based metathesis catalysts, this ruthenium carbene catalyst is stable to acids, alcohols, aldehydes and quaternary amine salts and can be used in a variety of solvents (C₆H₆, CH₂Cl₂, THF, *t*-BuOH).

The use of transition-metal catalyzed alkene metathesis has since enjoyed increasing attention as a synthetic method. The most commonly-used catalysts are based on Mo, W and Ru. Research efforts have been mainly focused on the synthesis of small molecules, but the application of olefin metathesis to polymer synthesis has allowed the preparation of new polymeric material with unprecedented properties (such as highly stereoregular poly-norbornadiene).

The utilization of olefin metathesis as a means to produce low molecular weight compounds from unsaturated elastomers has received growing interest. The use of an appropriate catalyst allows the cross-metathesis of the unsaturation of the polymer with the co-olefin. The end result is the cleavage of the polymer chain at the unsaturation sites and the generation of polymer fragments having lower molecular weights. In addition, another effect of this process is the "homogenizing" of the polymer chain lengths, resulting in a reduction of the polydispersity. From an application and processing stand point, a narrow molecular weight distribution of the raw polymer results in improved physical properties of the vulcanized rubber, whilst the lower molecular weight provides good processing behavior.

The so-called "depolymerization" of copolymers of 1,3-butadiene with a variety of co-monomers (styrene, propene, divinylbenzene and ethylvinylbenzene, acrylonitrile, vinyltrimethylsilane and divinyldimethyl-silane) in the presence of classical Mo and W catalyst system has been investigated. Similarly, the degradation of a nitrile rubber using WCl₆ and SnMe₄ or PhC=CH co-catalyst was reported in 1988. However, the focus of such research was to produce only low molecular fragments which could be characterized by conventional chemical means and contains no teaching with respect to the preparation of low molecular weight nitrile rubber polymers. Furthermore, such processes are non-controlled and produce a wide range of products.

The catalytic depolymerization of 1,4-polybutadiene in the presence of substituted olefins or ethylene (as chain transfer agents) in the presence of well-defined Grubb's or Schrock's catalysts is also possible. The use of Molybdenum or Tungsten compounds of the general structural formula {M(=NR₁)(OR₂)₂(=CHR); M = Mo, W} to produce low molecular weight polymers or oligomers from gelled polymers containing internal unsaturation along the polymer backbone was claimed in US 5,446,102. Again, however, the process disclosed is non-controlled, and there is no teaching with respect to the preparation of low molecular weight nitrile rubber polymers.

International Applications PCT/CA02/00966, PCT/CA02/00965, and WO-03/002613-A1 and Copending Canadian Patent Application. No.2,462,011 disclose that hydrogenated and non-hydrogenated nitrile rubber having lower molecular weights and narrower molecular weight distributions than those known in the art can be prepared by the olefin metathesis of nitrile butadiene rubber, optionally followed by hydrogenation of the resulting metathesized NBR. Currently, some of the lowest Mooney viscosity products are currently available from LANXESS Corporation.

### SUMMARY OF THE INVENTION

We have now discovered that, optionally hydrogenated nitrile terpolymers having lower molecular weights and narrower molecular weight distributions than those known in the art can be prepared by the olefin metathesis of a nitrile terpolymer followed by the optional hydrogenation of the resulting metathesized nitrile terpolymer.

Accordingly, the present invention relates to a process for the preparation of an optionally hydrogenated nitrile terpolymer including reacting a nitrile terpolymer in the presence of at lest one compound selected from the group consisting of a compound of the general formulae I, II, III, IV, or V; 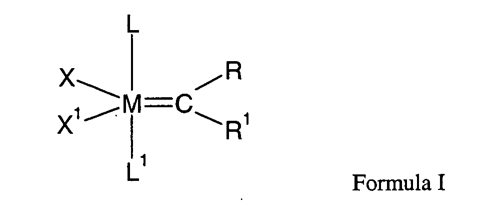 wherein:
M is Os or Ru,
R and R¹ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
X and X¹ are independently any anionic ligand, and
L and L¹ are independently any neutral ligand, such as phosphines, amines, thioethers or imidazolidinylidenes or any neutral carbine, optionally, L and L¹ can be linked to one another to from a bidentate neutral ligand; 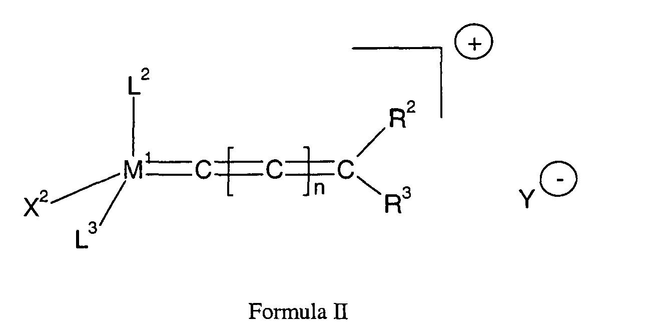
wherein:
M¹ is Os or Ru;
R² and R³ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
X² is a anionic ligand, and
L² is a neutral π-bonded ligand, independent of whether they are mono- or polycyclic,
L³ is a ligand selected from the group consisting of phosphines, sulfonated phosphines, fluorinated phosphines, functionalized phosphines bearing up to three aminoalkyl-, ammoniumalkyl-, alkoxyalkyl-, alkoxylcarbonylalkyl-, hydrocycarbonylalkyl-, hydroxyalkyl- or ketoalkyl- groups, phosphites, phosphinites, phosphonites, phosphinamines, arsines, stibenes, ethers, amines, amides, imines, sulfoxides, thioethers and pyridines,
Y⁻ is a non-coordinating anion,
n is an integer in the range of from 0 to 5; 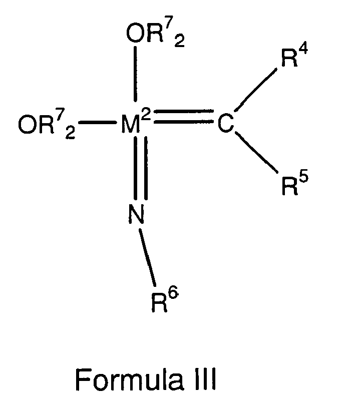
wherein
M² is Mo or W,
R⁴ and R⁵ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂C₂₀ alkoxycarbonyl, C₁-C₂₀ alkylthio, C₁-C₂₀ alkylsulfonyl and C₁-C₂₀ alkylsulfinyl,
R⁶ and R⁷ are independently selected from any unsubstituted or halo-substituted alkyl, aryl, aralkyl groups or silicon-containing analogs thereof, 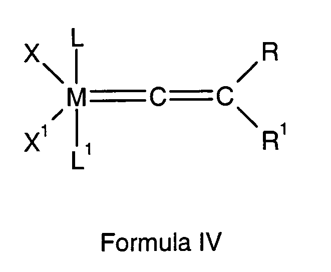
wherein:
M is Os or Ru,
R and R¹ are independently selected from the group consisting of hydrogen, substituted or unsubstituted alkyl, and substituted or unsubstituted alkyl,
X and X¹ are independently any anionic ligand, and
L and L¹ are independently any neutral ligand, such as phosphines, amines, thioethers or imidazolidinylidenes or any neutral carbine, optionally, L and L¹ can be linked to one another to from a bidentate neutral ligand; 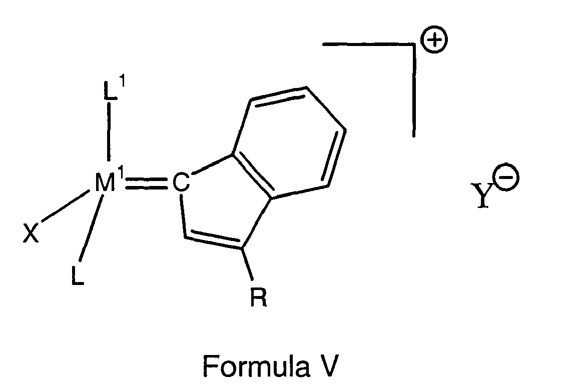
wherein:
M¹ is Os or Ru;
R is hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl;
X is selected from any anionic ligand; and
L¹ is a neutral π-bonded ligand, preferably but not limited to arene, substituted arene, heteroarene, independent of whether they are mono- or polycyclic;
L is a ligand selected from the group consisting of phosphines, sulfonated phosphines, fluorinated phosphines, functionalized phosphines bearing up to three aminoalkyl-, ammoniumalkyl-, alkoxyalkyl-, alkoxylcarbonylalkyl-, hydrocycarbonylalkyl-, hydroxyalkyl- or ketoalkyl- groups, phosphites, phosphinites, phosphonites, phosphinamines, arsines, stibenes, ethers, amines, amides, imines, sulfoxides, thioethers and pyridines;
Y⁻ is a non-coordinating anion;
and optionally in the presence of one co-olefin and hydrogenating the product of the metathesis reaction.

The present inventive process prepares low Mooney nitrile terpolymer rubbers having a Mooney viscosity (ML(1+4) @ 100°C) of below 25, preferably below 20, more preferably below 15 and most preferably below 10.

The present inventive process also produces hydrogenated nitrile terpolymers having a molecular weight (Mw) in the range of from 20,000 to 500,000, a Mooney viscosity (ML(1+4) @ 100°C) of in the range of from 1 to 55, and a molecular weight distribution (MWD) or polydispersity index of less than 2.5.

### DESCRIPTION OF THE INVENTION

As used throughout this specification, the term "nitrile terpolymer rubber" or "LT-NBR" is intended to have a broad meaning and is meant to encompass a copolymer having (a) repeating units derived from at least one conjugated diene, (b) at least one α,β-unsaturated nitrile, (c) repeating units derived from at least one further monomer selected from the group consisting of conjugated dienes, unsaturated carboxylic acids; alkyl esters of unsaturated carboxylic acids, alkoxyalkyl acrylates and ethylenically unsaturated monomers other than dienes and (d) optionally further copolymerizable monomer(s). If (a) and (c) are conjugated dienes, it is understood that the nitrile terpolymer rubber comprises repeating units derived from at least two different conjugated dienes.

As used throughout this specification, the term "hydrogenated" or hydrogenated nitrile terpolymer is intended to have a broad meaning and is meant to encompass a nitrile terpolymer wherein at least 10% of the residual C-C double bonds (RDB) present in the starting nitrile terpolymer are hydrogenated, preferably more than 50% of the RDB present are hydrogenated, more preferably more than 90% of the RDB are hydrogenated, even more preferably more than 95% of the RDB are hydrogenated and most preferably more than 99% of the RDB are hydrogenated.

The conjugated diene may be any known conjugated diene in particular a C₄-C₆ conjugated diene. Preferred conjugated dienes are butadiene, isoprene, piperylene, 2,3-dimethyl butadiene and mixtures thereof. Even more preferred C₄-C₆ conjugated dienes are butadiene, isoprene and mixtures thereof. The most preferred C₄-C₆ conjugated diene is butadiene.

The alpha,beta-unsaturated nitrile may be any known α,β-unsaturated nitrile, in particular a C₃-C₅ alpha,beta-unsaturated nitrile. Preferred C₃-C₅ α,β-unsaturated nitriles are acrylonitrile, methacrylonitrile, ethacrylonitrile and mixtures thereof. The most preferred C₃-C₅ α,β-unsaturated nitrile is acrylonitrile.

The unsaturated carboxylic acid may be any known unsaturated carboxylic acid copolymerizable with the other monomers, in particular a C₃-C₁₆ alpha,beta-unsaturated carboxylic acid. Preferred unsaturated carboxylic acids are acrylic acid, methacrylic acid, itaconic acid and maleic acid and mixtures thereof.

The alkyl ester of an unsaturated carboxylic acid may be any known alkyl ester of an unsaturated carboxylic acid copolymerizable with the other monomers, in particular an alkyl ester of an C₃-C₁₆ alpha,beta-unsaturated carboxylic acid. Preferred alkyl ester of an unsaturated carboxylic acid are alkyl esters of acrylic acid, methacrylic acid, itaconic acid and maleic acid and mixtures thereof, in particular methyl acrylate, 2-ethylhexyl acrylate, butyl acrylate and octyl acrylate. Preferred alkyl esters include methyl, ethyl, propyl, and butyl esters.

The alkoxyalkyl acrylate may be any known alkoxyalkyl acrylate copolymerizable with the other monomers, preferably methoxyethyl acrylate, ethoxyethyl acrylate and methoxyethoxyethyl acrylate and mixtures thereof.

The ethylenically unsaturated monomer may be any known ethylenically unsaturated monomer copolymerizable with the other monomers, preferably allyl glycidyl ether, vinyl chloroacetate, ethylene, butene-1, isobutylene and mixtures thereof.

According to the process of the present invention, the nitrile terpolymer is subject to a metathesis reaction and then hydrogenated.

The metathesis reaction is conducted in the presence of one ore more compounds of the general formulae I, II, III, IV, or V; 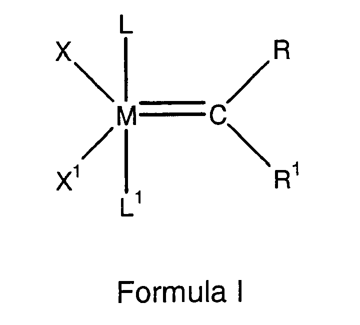 wherein:
M is Os or Ru,
R and R¹ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
X and X¹ are independently any anionic ligand, and
L and L¹ are independently any neutral ligand, such as phosphines, amines, thioethers or imidazolidinylidenes or any neutral carbine, optionally, L and L¹ can be linked to one another to from a bidentate neutral ligand; 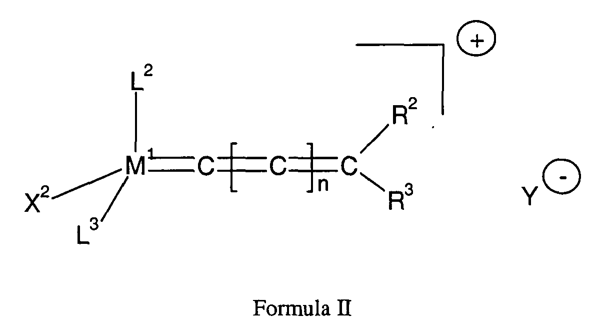
wherein:
M¹ is Os or Ru;
R² and R³ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
X² is a anionic ligand, and
L² is a neutral π-bonded ligand, independent of whether they are mono- or polycyclic,
L³ is a ligand selected from the group consisting of phosphines, sulfonated phosphines, fluorinated phosphines, functionalized phosphines bearing up to three aminoalkyl-, ammoniumalkyl-, alkoxyalkyl-, alkoxylcarbonylalkyl-, hydrocycarbonylalkyl-, hydroxyalkyl- or ketoalkyl- groups, phosphites, phosphinites, phosphonites, phosphinamines, arsines, stibenes, ethers, amines, amides, imines, sulfoxides, thioethers and pyridines,
Y⁻ is a non-coordinating anion,
n is an integer in the range of from 0 to 5; 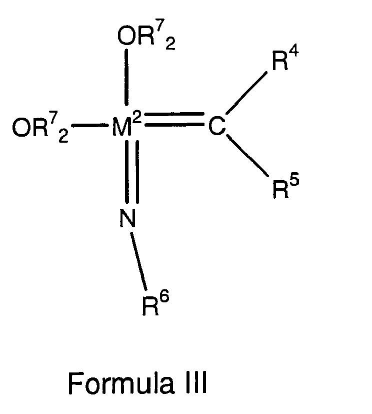
wherein
M² is Mo or W,
R⁴ and R⁵ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
R⁶ and R⁷ are independently selected from any unsubstituted or halo-substituted alkyl, aryl, aralkyl groups or silicon-containing analogs thereof, 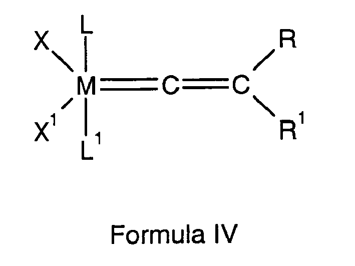
wherein:
M is Os or Ru,
R and R¹ are independently selected from the group consisting of hydrogen, substituted or unsubstituted alkyl, and substituted or unsubstituted alkyl,
X and X¹ are independently any anionic ligand, and
L and L¹ are independently any neutral ligand, such as phosphines, amines, thioethers or imidazolidinylidenes or any neutral carbine, optionally, L and L¹ can be linked to one another to from a bidentate neutral ligand; 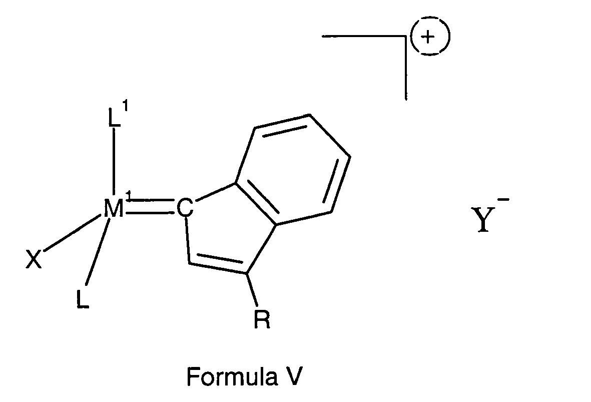
wherein:
M¹ is Os or Ru;
R is hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl;
X is selected from any anionic ligand; and
L¹ is a neutral π-bonded ligand, preferably but not limited to arene, substituted arene, heteroarene, independent of whether they are mono- or polycyclic;
L is a ligand selected from the group consisting of phosphines, sulfonated phosphines, fluorinated phosphines, functionalized phosphines bearing up to three aminoalkyl-, ammoniumalkyl-, alkoxyalkyl-, alkoxylcarbonylalkyl-, hydrocycarbonylalkyl-, hydroxyalkyl- or ketoalkyl- groups, phosphites, phosphinites, phosphonites, phosphinamines, arsines, stibenes, ethers, amines, amides, imines, sulfoxides, thioethers and pyridines;
Y⁻ is a non-coordinating anion.

Compounds of Formula I are preferred. Compounds of Formula I wherein L and L¹ are trialkylphosphines, X and X¹ are chloride ions and M is Ruthenium are even more preferred.

Compounds of Formula I wherein L¹ is a trialkylphosphine and L is an imidazolidinylidene ligand are most preferred.

Compounds of Formula V wherein L is a trialkylphosphine, L¹ is 1-methyl-4-iso-propylphenyl, X is a chloride ion, R is phenyl and M is Ruthenium are also preferred.

The amount of compounds utilized during the metathesis reaction depends upon the nature and catalytic activity of the compound(s) in question. Typically, the ratio of compound(s) to nitrile terpolymer is in the range of from 0.005-5, preferably in the range of from 0.005-0.5 and, more preferably, in the range of from 0.005-0.1.

The metathesis reaction can be carried out in the absence of any co-olefin. However, the reaction rate is improved when the metathesis reaction is carried out in the presence of a co-olefin. The co-olefin may be a hydrocarbon or it may be functionalized, however it should not inactivate the metathesis catalyst or otherwise interfere with the reaction. Preferred olefins include, but are not limited to, C₂ to C₁₆ linear or branched olefins such as ethylene, isobutene, styrene or 1-hexene. Where the co-olefin is a liquid (such as 1-hexene), the amount of co-olefin employed is preferably in the range of from 1 to 200 weight %. Where the co-olefin is a gas (such as ethylene) the amount of co-olefin employed is usually such that it results in a pressure in the reaction vessel in the range of from 2 * 10⁴ Pa to 2.5 * 10⁷ Pa, preferably in the range of from 1 * 10⁵ Pa to 1 * 10⁵ Pa and, more preferably, in the range of from 5.2 * 10⁵ Pa to 4 * 10⁶ Pa.

The metathesis reaction can be carried out in any suitable solvent which does not inactivate the catalyst or otherwise interfere with the reaction. Preferred solvents include, but are not limited to, dichloro-methane, benzene, toluene, tetrahydrofuran, methyl ethyl ketone, cylcohexane and the like. The most preferred solvent is monochloro-benzene (MCB). In certain cases the co-olefin can itself act as a solvent (for example, 1-hexene), in which case no other solvent is necessary.

The concentration of NBR in the reaction mixture is not critical but, obviously, should be such that the reaction is not hampered if the mixture is too viscous to be stirred efficiently, for example. Preferably, the concentration of NBR is in the range of from 1 to 40% by weight, most preferably in the range of from 6 to 15 wt.%.

The metathesis reaction is preferably carried out at a temperature in the range of from 20 to 140°C; more preferably in the range of from 30 to 120°C.

The reaction time will depend upon a number of factors, including cement concentration, amount of catalyst used and the temperature at which the reaction is performed. The metathesis is usually complete within the first two hours under typical conditions. The progress of the metathesis reaction may be monitored by standard analytical techniques, for example using GPC or solution viscosity. Whenever referenced throughout the specification the molecular weight distribution of the polymer was determined by gel permeation chromatography (GPC) using a Waters 2690 Separation Module and a Waters 410 Differential Refractometer running Waters Millenium software version 3.05.01. Samples were dissolved in tetrahydrofuran (THF) stabilized with 0.025% BHT. The columns used for the determination were three sequential mixed-B gel columns from Polymer Labs. Reference Standards used were polystyrene standards from American Polymer Standards Corp.

Reduction of the product from the metathesis reaction can be effected using standard reduction techniques known in the art. For example, homogeneous hydrogenation catalysts known to those of skill in the art, such as Wilkinson's catalyst {(PPh₃)₃RhCl} and the like can be used.

Processes for the hydrogenation of NBR are known and may also be used for the production of the hydrogenation nitrile terpolymers according to the invention. Rhodium or titanium is generally used as the catalyst, although platinum, iridium, palladium, rhenium, ruthenium, osmium, cobalt or copper in the form of the metals, but preferably in the form of metal compounds, may also be used, see for example US 3,700,637; DE-PS 2,539,132; EP-A-134 023; DE-OS 35 41 689; DE-OS 35 40 918; EP-A 298 386; DE-OS 35 29 252; DE-OS 34 33 392; US 4,464,515; and US 4,503,196.

Suitable catalysts and solvents for hydrogenation in homogeneous phase are described in the following, and in GB 1558491 of Bayer AG and in EP-A-0 471 250, previously incorporated herein by reference. It is not intended to restrict the catalysts and solvents for hydrogenation useful for the invention, and these are provided only by way of example.

The selective hydrogenation can be achieved by means of a rhodium-containing catalyst. The preferred catalyst is of the formula

(R⁸ₘB)ₗRhX³ₙ

in which each R⁸ is a C₁-C₈-alkyl group, a C₄-C₈-cycloalkyl group a C₆-C₁₅-aryl group or a C₇-C₁₅-aralkyl group, B is phosphorus, arsenic, sulfur, or a sulphoxide group S=0, X³ is hydrogen or an anion, preferably a halide and more preferably a chloride or bromide ion, 1 is 2, 3 or 4, m is 2 or 3 and n is 1, 2 or 3, preferably 1 or 3. Preferred catalysts include tris-(triphenylphosphine)-rhodium(I)-chloride, tris(triphenylphosphine)-rhodium(III)-chloride and tris-(dimethylsulphoxide)-rhodium(III)-chloride, and tetrakis- (triphenylphosphine)-rhodium hydride of formula ((C₆H₅)₃P)₄RhH, and the corresponding compounds in which triphenylphosphine moieties are replaced by tricyclohexyl-phosphine moieties. The catalyst can be used in small quantities. An amount in the range of 0.01 to 1.0% preferably 0.03% to 0.5%, most preferably 0.1% to 0.3% by weight based on the weight of polymer is suitable.

It is known to use the catalyst with a co-catalyst that is a ligand of formula R⁸ₘB, where R, m and B are as defined above, and m is preferably 3. Preferably B is phosphorus, and the R groups can be the same or different. Thus there can be used a triaryl, trialkyl, tricycloalkyl, diaryl monoalkyl, dialkyl monoaryl diaryl monocycloalkyl, dialkyl monocycloalkyl, dicycloalkyl monoaryl or dicycloalkyl monoaryl co-catalysts. Examples of co-catalyst ligands are given in US Patent No 4,631,315, the disclosure of which is incorporated by reference. The preferred co-catalyst ligand is triphenylphosphine. The co-catalyst ligand is preferably used in an amount in the range 0.3 to 5%, more preferably 0.5 to 4% by weight, based on the weight of the copolymer. Preferably also the weight ratio of the rhodium-containing catalyst compound to co-catalyst is in the range 1:3 to 1:55, more preferably in the range 1:5 to 1:45. The weight of the co-catalyst, based on the weight of one hundred parts of rubber, is suitably in the range 0.1 to 33, more suitably 0.5 to 20 and preferably 1 to 5, most preferably greater than 2 to less than 5.

The hydrogenation may be advantageously performed *in situ* i.e. in the same reaction vessel in which the metathesis step is carried out, without the need to first isolate the metathesized product. The hydrogenation catalyst is simply added to the vessel, which is then treated with hydrogen to produce the HNBR.

The hydrogenation may also be carried in the absence of a hydrogenation catalyst. In such a process, following metathesis, hydrogen gas is added to the vessel and hydrogenation is performed. The hydrogenation may also be performed as disclosed in U.S. Patent No. 6,683,136 (for jurisdictions allowing for such process, the subject matter of U.S. Patent No. 6,683,136 is incorporated by reference). In such a process terpolymers is subject to hydrogenation in the presence of a hydrogenation catalyst, a co-catalyst, and a proton acceptor that is non-coordinating with the metal-complex catalyst. Suitable proton acceptors include epoxidized soy bean oil (ESBO), epoxidized linseed oil, epoxidized corn oil, epoxidized coconut oil, epoxidized cottonseed oil, epoxidized olive oil, epoxidized palm oil, epoxidized palm kernel oil, epoxidized peanut oil, epoxidized cod liver oil, epoxidized tung oil, epoxidized beef tallow, and epoxidized butter, and a mixture of two or more of the above compounds.

Hydrogenation in this invention is understood by preferably more than 50 % of the residual double bonds (RDB) present in the starting nitrile polymer being hydrogenated, preferably more than 90 % of the RDB are hydrogenated, more preferably more than 95 % of the RDB are hydrogenated and most preferably more than 99 % of the RDB are hydrogenated.

Low Mooney nitrile terpolymer rubbers prepared according to the present invention have a Mooney viscosity (ML(1+4) @ 100°C) of below 25, preferably below 20, more preferably below 15 and most preferably below 10.

Low Mooney hydrogenated nitrile terpolymer rubbers prepared according to the present invention have a Mooney viscosity (ML(1+4) @ 100°C) of between 1 and 55, preferably between 5 and 50, more preferably between 10 and 45 and most preferably between 15-40.

The present invention further relates to a rubber compound containing a low Mooney, optionally hydrogenated, nitrile terpolymer. The present rubber compound may further contain up to 25 phr of other polymers such as polyolefins, BR (polybutadiene), ABR (butadiene/acrylic acid-C₁-C₄-alkylester-copolymers), CR (polychloroprene), IR (polyisoprene), SBR (styrene/butadiene-copolymers) with styrene contents in the range of 1 to 60 wt%, EPDM (ethylene/propylene/diene-copolymers), HNBR, HXNBR, FKM (fluoropolymers or fluororubbers), and mixtures of the given polymers. Careful blending with said other polymers often reduces cost of the polymer blend without sacrificing too much of the desired final properties of the compound. The amount of other polymers will depend on the process condition to be applied during manufacture of shaped articles and the targeted final properties and is readily available by few preliminary experiments.

In order to prepare a rubber compound based on the present inventive optionally hydrogenated low molecular weight nitrile terpolymer, preferably at least one filler has to be added.

The filler(s) may be an active or an inactive filler or a mixture thereof. The filler(s) may be:
- highly dispersed silicas, prepared e.g. by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
- large aspect ratio nanoclays such as Cloisite^{®}
or mixtures thereof.

Examples of preferred mineral fillers include silica, silicates, clay such as bentonite, gypsum, alumina, titanium dioxide, talc, mixtures of these, and the like. For many purposes, the preferred mineral is silica, more preferably silica made by carbon dioxide precipitation of sodium silicate. Dried amorphous silica particles suitable for use in accordance with the present invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, in the range from 50 and 450 square meters per gram and a DBP absorption, as measured in accordance with DIN 53601, in the range from 150 and 400 grams per 100 grams of silica, and a drying loss, as measured according to DIN ISO 787/11, of in the range of from 0 to 10 percent by weight. Suitable silica fillers are available under the trademarks HiSil^{®} 210, HiSil^{®} 233 and HiSil^{®} 243 from PPG Industries Inc. Also suitable are Vulkasil S and Vulkasil N, from Bayer AG.

Often, use of carbon black as a filler is advantageous. Usually, carbon black is present in the rubber compound in an amount of in the range of from 20 to 200 parts by weight, preferably 30 to 150 parts by weight, more preferably 40 to 100 parts by weight. Further, it might be advantageous to use a combination of carbon black and mineral filler in the present inventive rubber compound. In this combination the ratio of mineral fillers to carbon black is usually in the range of from 0.05 to 20, preferably 0.1 to 10.

Optionally, the present rubber compound further contains a carbodiimide, a polycarbodiimide or mixtures thereof. The preferred carbodiimide is available commercially under the tradenames Rhenogram^{®}P50 and Stabaxol^{®} P. This ingredient may be used in the present rubber compound in an amount in the range of from 0 to about 15 parts by weight, more preferably in the range of from 0 to about 10 parts by weight, even more preferably in the range of from about 0 to about 3 parts by weight.

Preferably, the present inventive rubber compound further contains an acrylic compound. As used throughout this specification, the term "acrylic compound" is intended to have a broad meaning and is meant to encompass compounds of the general structure [R-CH=CR'COO⁻]ₙ Mⁿ⁺ wherein R and R' are aliphatic or aromatic hydrocarbon groups or hydrogen and are independently selected and are the same or different from each other and M is a metal ion selected from group 2, 12 or 13 (IUPAC 1985) and n is an integer of 2 or 3 as well as liquid acrylates, such as trimethylolpropanetrimethacrylate (TRIM), butanedioldimethacrylate (BDMA) and ethylenglycoldimethacrylate (EDMA). Reference is made to acrylates known from EP-A1-0 319 320, p. 3, 1. 16 to 35, from U.S. Patent No. 5,208,294, in Col. 2, 1. 25 to 40, and from U.S. Patent No. 4 983 678, Col. 2, 1. 45 to 62. Preferred are zinc acrylate, zinc diacrylate or zinc dimethacrylate or a liquid acrylate. It might be advantageous to use a combination of different acrylates and/or metal salts thereof. It is preferable to use metal acrylates in combination with a Scorch-retarder such as sterically hindered phenols (e.g. methyl-substituted aminoalkylphenols, preferably 2,6-di-tert.-butyl-4-dimethylaminomethylphenol).

In the present inventive rubber compound acrylic compounds are present in an amount in the range of from 0 to 100 phr (=parts per hundred parts of rubber), preferably 0.1 to 20 phr, more preferably 0.2 - 7 phr.

The present invention also related to a vulcanizable rubber compound containing the present inventive rubber compound and one or more vulcanization agents or curing systems. The present invention is not limited to a special curing system, however, peroxide curing system(s) are preferred. Furthermore, the invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the rubber compound is in the range of from 1 to 10 phr, preferably from 4 to 8 phr. Subsequent curing is usually performed at a temperature in the range of from 100 to 200° C, preferably 130 to 180° C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzene).

The vulcanizable rubber compound according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are, e.g., from 0.1 to 50 phr. Preferably the vulcanizable compound containing the rubber compound further contains in the range of 0.1 to 20 phr of one or more organic fatty acids as an auxiliary product, preferably an unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8-22 carbon atoms, more preferably 12-18. Examples include stearic acid, palmitic acid and oleic acid and their calcium-, zinc-, magnesium-, potassium- and ammonium salts.

The ingredients of the polymer blend, the rubber compound and the vulcanizable compound are often mixed together, suitably at an elevated temperature that may range from 25° C to 200° C. Normally the mixing time does not exceed one hour and a time in the range from 2 to 30 minutes is usually adequate. The mixing of the rubbers, optionally the filler(s), optionally vulcanization agent, and/or further ingredients is suitably carried out in an internal mixer such as a Banbury mixer, or a Haake or Brabender internal mixer. A two roll mill mixer also provides a good dispersion of the compounds within the final product. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted pre-crosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

The present inventive rubber compound and the vulcanizable rubber compound are very well suited for the manufacture of a shaped article, such as a seal, hose, bearing pad, stator, well head seal, valve plate, cable sheathing, wheel roller, pipe seal, in place gaskets or footwear component. Furthermore, they are very well suited for wire and cable production.

The low Mooney nitrile terpolymer and the preferred hydrogenated nitrile terpolymer of the present invention can be characterized by standard techniques known in the art. For example, the molecular weight distribution of the polymer was determined by gel permeation chromatography (GPC) using a Waters 2690 Separation Module and a Waters 410 Differential Refractometer running Waters Millenium software version 3.05.01. Samples were dissolved in tetrahydrofuran (THF) stabilized with 0.025% BHT. The columns used for the determination were three sequential mixed-B gel columns from Polymer Labs. Reference Standards used were polystyrene standards from American Polymer Standards Corp.

The invention is further illustrated but is not intended to be limited by the following examples in which all parts and percentages are by weight unless otherwise specified.

### Examples

Tris(triphenylphosphine)Rhodium Chloride (Wilkinson's catalyst - hydrogenation), [1,3-bis-(2,4,6-trimethylphenyl)-2-imidazolidiniylidene]dichloro(phenylmethylene)(tricyclohexylphosphine) (Grubb's 2^{nd} Generation catalyst) triphenylphosphine (TPP) and monochlorobenzene (MCB) were purchased from JMI, Boulder Scientific Company, ELF Atochem and PPG respectively and used as received.

### Examples 1-2: (metathesis, no co-olefin)

The reactions were conducted by dissolving a specified amount of rubber terpolymer in a solvent (MCB, Monochlorobenzene) to make a 6 wt.% polymer solution. The Grubb's 2nd generation catalyst (loading in Table 1) was transferred to the polymer solution in 5mL of MCB. Nitrogen gas was flowed over the open vessel prior to sealing. The glass vessel was then shaken at 25° C for a period of 12 hr. This resulted in a low Mooney nitrile terpolymer which was isolated from solution by steam coagulation. The rubber was then cut into small pieces and dried in a vacuum oven.

### Examples 3-4: (metathesis with co-olefin)

The reactions were conducted by dissolving a specified amount of rubber terpolymer in a solvent (MCB, Monochlorobenzene) to make a 6% wt polymer solution to which the co-olefin (1-hexene) was added. The Grubb's 2nd generation catalyst was then transferred to the said polymer solution in 5mL of MCB. Nitrogen gas was flowed over the open vessel prior to sealing. The glass vessel was then shaken at 25° C for a period of 12 hr. This resulted in a low Mooney nitrile terpolymer which was isolated from solution by steam coagulation. The rubber was then cut into small pieces and dried in a vacuum oven.

**Table 1 - Low Mooney Nitrile Terpolymers**

| **Example** | **Co- Olefin** 1-Hexene (phr) | **Metathesis Catalyst (phr)** | **Mₙ** | **M_{w}** | **PDI** | **ML(1+4) @100°C** |
|---|---|---|---|---|---|---|
| Comparative Example 1*- Terpolymer 1 | N/A | 0 | 41000 | 157000 | 3.8 | 31 |
| Inventive Example 1a prepared with Terpolymer 1 | N/A | 0.005 | 54000 | 134000 | 2.4 | 28 |
| Inventive Example 1b prepared with Terpolymer 1 | N/A | 0.05 | 35000 | 83000 | 2.4 | < 1 |
| Comparative Example 2**- Terpolymer 2 | N/A | 0 | 51000 | 308000 | 4.1 | 27 |
| Inventive Example 2a prepared with Terpolymer 2 | N/A | 0.005 | 47000 | 119000 | 2.5 | 14 |
| Inventive Example 2b prepared with Terpolymer 2 | N/A | 0.05 | 27000 | 50000 | 1.8 | < 1 |
| Comparative Example 3***- Terpolymer 3 | 0 | 0 | 72159 | 181565 | 2.5 | 31 |
| Example 3a prepared with Terpolymer 3 | 2 | 0.006 | 43879 | 95358 | 2.2 | < 10 |
| Example 3b prepared with Terpolymer 3 | 2 | 0.01 | 32262 | 67287 | 2.1 | < 10 |
| Comparative Example 4****- Terpolymer 4 | 0 | 0 | 81872 | 364488 | 4.4 | 27 |
| Example 4a prepared with Terpolymer 4 | 2 | 0.006 | 69371 | 261454 | 3.8 | 13 |
| Example 4b prepared with Terpolymer 4 | 2 | 0.01 | 62438 | 206225 | 3.3 | < 10 |

| | | | | | | |
|---|---|---|---|---|---|---|
| * Terpolymer (1): Perbunan^{®} VP KA 8877 (carboxylated nitrile butadiene rubber available from LANXESS Corporation having 33wt% acrylonitrile, 5 wt% methacrylic acid and a Mooney viscosity, ML(1+4) @ 100° C=31) ** Terpolymer (2): Perbunan^{®} VP KA 8876 (butyl acrylate nitrile butadiene rubber available from LANXESS Corporation having 21wt% acrylonitrile, 25 wt% butyl acrylate and a Mooney viscosity, ML(1+4) @ 100° C=27) *** Terpolymer (3): Perbunan^{®} VP KA 8877 (carboxylated nitrile butadiene rubber available from LANXESS Corporation having 33 wt% acrylonitrile, 5 wt% methacrylic acid and a Mooney viscosity, ML(1+4) @ 100° C=31) **** Terpolymer (4): Perbunan^{®} VP KA 8876 (butyl acrylate nitrile butadiene rubber available from LANXESS Corporation having 21 wt% acrylonitrile, 25wt% butyl acrylate and a Mooney viscosity, ML(1+4) @ 100°C = 27) | | | | | | |

### Example 5:

The reactions were conducted by dissolving a specified amount of rubber terpolymer in a solvent (MCB, Monochlorobenzene) to make a 6 wt.% polymer solution to which the co-olefin (1-hexene) was added. The Grubb's 2nd generation catalyst was then transferred to the polymer solution in 5mL of MCB. Nitrogen gas was flowed over the open vessel prior to sealing. The glass vessel was then shaken at 25°C for a period of 12hr. This results in a low Mooney nitrile polymer which is isolated from solution by steam coagulation. The rubber is then cut into small pieces and dried in a vacuum oven.

| Example | Co-olefin (1-Hexene) (phr) | Metathesis Catalyst (phr) | Mₙ | M_{w} | PDI | ML(1+4) @ 100°C |
|---|---|---|---|---|---|---|
| Comparative Example 5*****-Terpolymer 5 | 0 | 0 | 73551 | 249925 | 3.4 | 31 |
| Inventive Example 5a- prepared with Terpolymer 5 | 1 | 0.005 | 61756 | 208845 | 3.38 | 22 |
| Inventive Example 5b- prepared with Terpolymer 5 | 2 | 0.005 | 58521 | 142234 | 2.43 | 20 |
| Inventive Example 5c- prepared with Terpolymer 5 | 4 | 0.005 | 54047 | 128082 | 2.37 | 14 |
| Inventive Example 5d- prepared with Terpolymer 5 | 2 | 0.006 | 55105 | 130744 | 2.37 | 16 |

| | | | | | | |
|---|---|---|---|---|---|---|
| ***** Terpolymer (5): Perbunan^{®} VP KA 8877 (carboxylated nitrile butadiene rubber available from LANXESS Corporation having a 33 wt.% acrylonitrile, 5 wt.% methacrylic acid and a Mooney viscosity, ML(1+4) @ 100° C=31) | | | | | | |

### Examples 6 and 7 - Metathesis and Hydrogenation of Nitrile terpolymers

For Comparative Examples 6 and 7 *(hydrogenation only)* the reactions were conducted with a 6% total solid and MCB was used as the solvent. The hydrogenation catalyst (Wilkinson catalyst) and co-catalyst (TPP) were added together in MCB to the polymer solution. Hydrogenation was maintained at 138° C and lasted for 3-4 hours. Reactions were carried out in a 0.5 US gallon Parr high-pressure reactor under the following conditions:

| | |
|---|---|
| Cement solids | 6% |
| Solvent | MCB |
| H₂ pressure | 1200psi |
| TPP | 1phr |
| Agitator speed | 600rpm |
| Reactor temperature | 138° C |
| Catalyst (Wilkinson) Loading | 0.08phr |

The %Hydrogenation of Comparative Examples 6 and 7 was 96.5 and 99.0% respectively. At the end of the hydrogenation, the terpolymers are isolated by steam coagulation. The rubber was then cut into small pieces and dried in a vacuum oven.

For Inventive Examples 6 and 7 *(metathesis followed by hydrogenation)* the reactions were conducted with a 6% total solid and MCB was used as the solvent. The cement was degassed three times using ethylene (100psi). The Grubb's 2nd generation catalyst was pressure transferred into the reactor using ethylene. The temperature of the reactor was kept constant at 80°C and the pressure at 500psi ethylene for 1-2 hours of the metathesis reaction then the ethylene was vented off and the pressure in the reactor was reduced to approximately 50psi. Hydrogen was used to purge out the remaining ethylene, then an MCB solution of the hydrogenation catalyst (Wilkinson catalyst) and co-catalyst (TPP) were added to the reactor and hydrogenation was carried out for 1-2 hours. The same Hydrogenation conditions used for Comparative Examples 6 and 7 were adopted for the Inventive Examples. The % Hydrogenation of Inventive Examples 6a and 7a is 99 and 98% respectively. At the end of the hydrogenation, the terpolymers were isolated by steam coagulation. The rubber was then cut into small pieces and dried in a vacuum oven.

For both Comparative and Inventive Examples 6 (prepared from Terpolymer 1 = XNBR), 1phr ESBO (Epoxidized Soy Bean Oil) is added to the polymer solution and agitated for 2-4 hours before the hydrogenation catalyst/co-catalyst are added.

**Table 3 - Low Mooney Hydrogenated Nitrile Terpolymers**

| Examples 6 and 7 * | Metathesis Catalyst (phr) | Mₙ | M_{w} | PDI | ML(1+4) @ 100°C |
|---|---|---|---|---|---|
| Comparative Example 6 is prepared by hydrogenating Terpolymer 1 | 0 | 70000 | 187000 | 2.6 | 69 |
| Example 6a is prepared by metathesizing then hydrogenating Terpolymer 1 | 0.005 | 62000 | 141000 | 2.3 | 37 |
| Comparative Example 7 is prepared by hydrogenating Terpolymer 2 | 0 | 90000 | 462000 | 5.2 | 68 |
| Example 7A is prepared by metathesizing then hydrogenating Terpolymer 2. | 0.005 | 49000 | 107000 | 2.2 | 35 |

| | | | | | |
|---|---|---|---|---|---|
| * Terpolymers 1 and 2 are also the sources of the comparative and inventive Examples 6 and 7 respectively. | | | | | |

The data from Examples 1-4 illustrate that metathesis, can be performed with or without the presence of a co-olefin, leads to low molecular weight and lower polydispersity index (narrower molecular weight distribution). The higher the level of the metathesis catalyst results in a lower molecular weight, polydispersity, and Mooney of the polymer.

The data from Example 5 illustrate that increasing the level of co-olefin leads to more efficient reduction in polymer properties: molecular weight, polydispersity, and Mooney. This presents the advantage of lowering the properties to a certain level without adding extra catalyst which is more expensive.

Examples 6 and 7 illustrate that the metathesis of nitrile terpolymers followed by hydrogenation leads to hydrogenated nitrile terpolymers having lower molecular weight, polydispersity index, and Mooney viscosity. The reduction in these properties leads to polymers with improved processibility, especially in injection molding applications, as well as improved physical properties.

The examples presented in this invention provide the first illustration of low molecular weight hydrogenated nitrile terpolymers and the process of making them. In addition, this invention presents a higher degree of control of the product formed by optimizing reaction conditions (catalyst/co-olefin levels, and time/temperature) in contrast to other techniques/processes, such as the mechanical degradation process of regular hydrogenated nitrile terpolymers that can't be controlled and results in inconsistent products having poor physical properties.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for preparing nitrile terpolymers comprising at least one conjugated diene, at least one α,β-unsaturated nitrile and at least one monomer selected from the group consisting of alkyl esters of unsaturated carboxylic acids, alkoxyalkyl acrylates and ethylenically unsaturated monomers other than dienes, the process comprising:
reacting the nitrile terpolymer in the presence of at least one compound selected from the group consisting of compounds of the general formulae I, II, III, IV, or V; 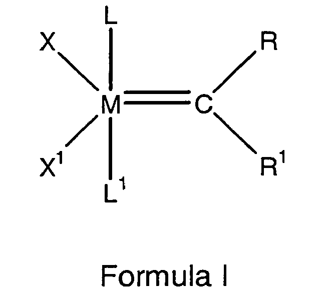
wherein:
M is Os or Ru,
R and R¹ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
X and X¹ are independently any anionic ligand, and
L and L¹ are independently any neutral ligand, such as phosphines, amines, thioethers or imidazolidinylidenes or any neutral carbine, optionally, L and L¹ can be linked to one another to from a bidentate neutral ligand; 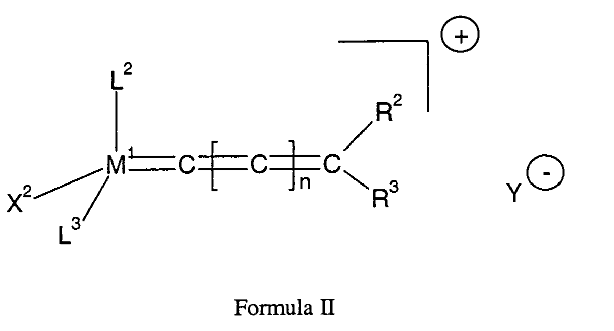
wherein:
M¹ is Os or Ru;
R² and R³ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
X² is a anionic ligand, and
L² is a neutral π-bonded ligand, independent of whether they are mono- or polycyclic,
L³ is a ligand selected from the group consisting of phosphines, sulfonated phosphines, fluorinated phosphines, functionalized phosphines bearing up to three aminoalkyl-, ammoniumalkyl-, alkoxyalkyl-, alkoxylcarbonylalkyl-, hydrocycarbonylalkyl-, hydroxyalkyl- or ketoalkyl- groups, phosphites, phosphinites, phosphonites, phosphine amines, arsines, stibenes, ethers, amines, amides, imines, sulfoxides, thioethers and pyridines,
Y⁻ is a non-coordinating anion,
n is an integer in the range of from 0 to 5; 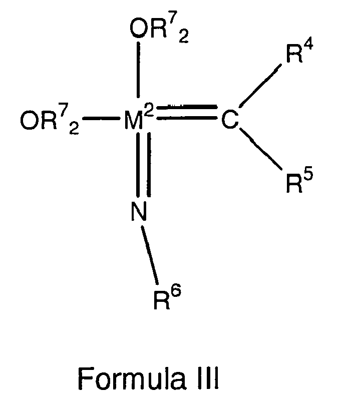
wherein
M² is Mo or W,
R⁴ and R⁵ are, independently, hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl,
R⁶ and R⁷ are independently selected from any unsubstituted or halo-substituted alkyl, aryl, aralkyl groups or silicon-containing analogs thereof, 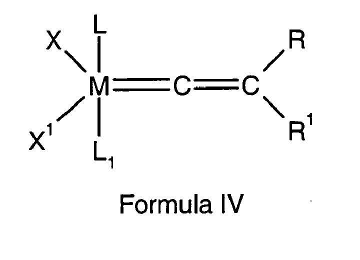
wherein:
M is Os or Ru,
R and R¹ are independently selected from the group consisting of hydrogen, substituted or unsubstituted alkyl, and substituted or unsubstituted alkyl,
X and X¹ are independently any anionic ligand, and
L and L¹ are independently any neutral ligand, such as phosphines, amines, thioethers or imidazolidinylidenes or any neutral carbine, optionally, L and L¹ can be linked to one another to from a bidentate neutral ligand; 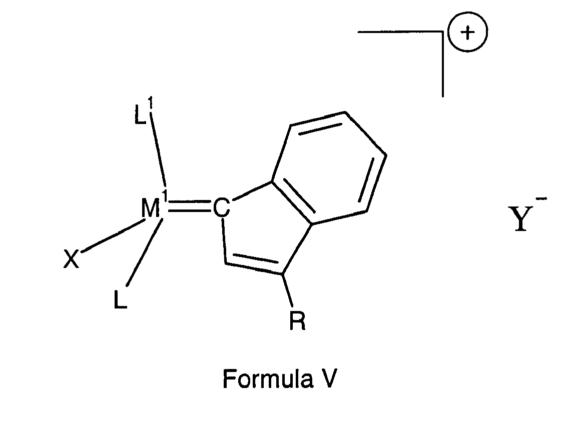
wherein:
M¹ is Os or Ru;
R is hydrogen or a hydrocarbon selected from the group consisting of C₂-C₂₀ alkenyl, C₂-C₂₀ alkynyl, C₁-C₂₀ alkyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthio, C₁-C₂₀ alkylsulfonyl and C₁-C₂₀ alkylsulfinyl;
X is selected from any anionic ligand; and
L¹ is a neutral π-bonded ligand, preferably but not limited to arene, substituted arene, heteroarene, independent of whether they are mono- or polycyclic;
L is a ligand selected from the group consisting of phosphines, sulfonated phosphines, fluorinated phosphines, functionalized phosphines bearing up to three aminoalkyl-, ammoniumalkyl-, alkoxyalkyl-, alkoxylcarbonylalkyl-, hydrocycarbonylalkyl-, hydroxyalkyl- or ketoalkyl- groups, phosphites, phosphinites, phosphonites, phosphinamines, arsines, stibenes, ethers, amines, amides, imines, sulfoxides, thioethers and pyridines;
Y⁻ is a non-coordinating anion.

2. A process for preparing low molecular weight hydrogenated nitrile terpolymers comprising hydrogenating the reaction product of Claim 1.

3. The process according to Claim 1, wherein in the compounds of formula I, L and L' are trialkylphosphines, X and X' are chloride ions and M is ruthenium.

4. The process according to Claim 1, wherein the compounds of formula V, L is trialkylphosphine, L' is methyl-4-iso-propylphenyl, X is a chloride ion, R is phenyl and M is ruthenium.

5. The process according to Claim 1, wherein the compound is [1,3-bis-(2,4,6-trimethylphenyl)-2-imidazolidiniylidene] dichloro(phenylmethylene)(tricyclohexylphosphine).

6. The process according to Claim 1, further comprising the presence of a co-olefin.

7. The process according to Claim 6, wherein the co-olefin is a C₂ to C₁₆ linear or branched olefin.

8. The process according to Claim 7, wherein the olefin is ethylene, isobutene, styrene or hexene.

9. The process according to Claim 1, further comprising the presence of a solvent.

10. The process according to Claim 2, wherein the hydrogenation is conducted in the presence of a hydrogenation catalyst.

11. The process according to Claim 10, wherein the catalyst is of the formula
(R⁸ₘB)ₗRhX³ₙ
wherein
R⁸ is a C₁-C₈-alkyl group, a C₄-C₈-cycloalkyl group a C₆-C₁₅-aryl group or a C₇-C₁₅-aralkyl group, B is phosphorus, arsenic, sulfur, or a sulphoxide group S=0, X³ is hydrogen or an anion.

12. The process according to Claim 11, wherein the catalyst is selected from the group consisting of tris-(triphenylphosphine)-rhodium(I)-chloride, tris(triphenylphosphine)-rhodium(III)-chloride and tris-(dimethylsulphoxide)-rhodium(III)-chloride, and tetrakis-(triphenylphosphine)-rhodium hydride of formula ((C₆H₅)₃P)₄RhH, and the corresponding compounds in which triphenylphosphine moieties are replaced by tricyclohexyl-phosphine moieties.

13. The process according to Claim 10, further comprising the presence of a co-catalyst, preferably in the presence of triphenylphosphine.

14. A nitrile terpolymer prepared according to Claim 1.

15. A hydrogenated terpolymer prepared according to Claim 2, wherein the hydrogenated terpolymer has a Mooney viscosity (ML(1+4) @ 100° C) of between 1-55.

16. A hydrogenated terpolymer according to Claim 16, wherein the hydrogenated terpolymer has a Mooney Viscosity (ML(1+4) @ 100° C) of between 5-50, preferably of between 10-45 and more preferably 15-40.

17. A nitrile terpolymer according to Claim 14, wherein the nitrile terpolymer has a Mooney viscosity (ML(1+4) @ 100° C) of below 25, preferably of below 20, more preferably of below 15 and most preferably of below 10.

18. The process according to Claim 13, further comprising the presence of a proton acceptor that is non-coordinating with a metal complex catalyst.

19. The process according to Claim 18, wherein the proton acceptor is epoxidized soy bean oil.
